# EUROPÄISCHE PATENTSCHRIFT

(11) **EP 2 714 946 B1**
(45) Veröffentlichungstag und Bekanntmachung des Hinweises auf die Patenterteilung: **25.07.2018**
(21) Anmeldenummer: 12737193.8
(22) Anmeldetag: 29.05.2012
(51) Int. Cl.: F27B 9/06, F27B 9/40, C21D 1/42, C21D 1/74, C21D 9/56, C21D 9/60, F27B 9/04, F27B 9/28, F27D 11/06, F27D 11/12

(54) **VERFAHREN UND VORRICHTUNG ZUR HERSTELLUNG OXIDIERTER METALLBÄNDER**
METHOD AND DEVICE FOR PRODUCING OXIDIZED METAL STRIPS
PROCÉDÉ ET DISPOSITIF POUR PRODUIRE DES BANDES MÉTALLIQUES OXYDÉES

(30) Priorität: 27.05.2011 DE 102011102659
(43) Veröffentlichungstag der Anmeldung: 09.04.2014
(73) Patentinhaber: Thermprotec GmbH, 77736 Zell am Hammersbach (DE)
(72) Erfinder: GAUS, Rainer, 83703 Gmund am Tegernsee (DE); YAMADA, Shuji, Osaka City 537-0025 (JP)
(74) Vertreter: Heinze, Ekkehard
(86) Internationale Anmeldenummer: PCT/DE2012/000566
(87) Internationale Veröffentlichungsnummer: WO 2012/163332

(56) Entgegenhaltungen:
- EP-A1- 0 107 991
- US-A- 2 502 770
- US-A- 4 816 090
- US-A1- 2004 177 903
- US-A1- 2010 062 163

## Beschreibung

### Gebiet der Erfindung

Die Erfindung betrifft ein Verfahren zur Herstellung oxidierter Metallbänder. Sie betrifft des Weiteren eine Vorrichtung zur Durchführung dieses Verfahrens.

### Stand der Technik

Metallische Packbänder unterschiedlicher Dimension werden aus Korrosionsschutz-und optischen Gründen voroxidiert. Dabei bildet sich eine Oxidschicht mit einer blauen Farbe. Diese Schicht reduziert die Korrosionsanfälligkeit und ist zudem optisch ansprechender als die rein metallische Oberfläche. Die Metallbänder sind typischerweise zwischen 10 mm und 50 mm breit und haben eine Dicke zwischen 0,2 mm und 2 mm.

Die Metallbänder werden von Rollen, mehrere Bänder nebeneinander, in einem flüssigen Bleibad erwärmt und durch den anschließenden Kontakt mit Luftsauerstoff findet die Oxidation statt. Die Bleibadtemperatur liegt aufgrund der Schmelztemperatur des Bleibades bei ca. 320°C, und die Metallstreifen erreichen dabei die gewünschte Temperatur. Die Herstellung erfolgt meist kontinuierlich und zum Rollenwechsel werden sogenannte Akkumulatoren eingesetzt. Diese ermöglichen einen sequentiellen Stillstand des Bandes, der zum Wechsel der Rollen genutzt werden kann.

Das flüssige Blei ist toxisch, und die Produkte werden als bleifrei verkauft.

Die Reinigung der Bäder ist aufwendig, und es entsteht viel Sondermüll. Zudem verunreinigt vorhandenes Öl auf der Oberfläche der Metallbänder das Bleibad kontinuierlich was zu einem hohen Wartungsaufwand führt. Bei diesem Verfahren ist die Produktionsgeschwindigkeit auf ca. 70m/min limitiert da sonst flüssiges Bei an den Metallbändern haftet und aus dem Bad heraustransportiert wird.

Aus der US 2004/177903A1 und US 2010/062163 A1 sind ein Verfahren und eine Vorrichtung zur Metallbandoxidation mittels induktionsheizung und Zuführung von Sauerstoff/Luft bekannt. Den Druckschriften sind keine Werte für die relevanten Verfahrensparameter und keine Lösung zur Gewährleistung einer hohen Strukturqualität der behandelten Metallbänder entnehmbar.

Der Erfindung liegt die Aufgabe zugrunde, ein verbessertes Verfahren zur Herstellung voroxidierter Metallbänder und eine Vorrichtung zu dessen Durchführung anzugeben.

### Darstellung der Erfindung

Diese Aufgabe wird in ihrem Verfahrensaspekt gelöst durch ein Verfahren mit den Merkmalen des Anspruchs 1 und in ihrem Vorrichtungsaspekt durch eine Vorrichtung mit den Merkmalen des Anspruchs 7.

Die Metallbänder werden in einer Induktionsspule auf die geforderte Temperatur von ca. 320°C erwärmt. Die Oxidation findet hierbei durch den Luftsauerstoff statt, in Ausgestaltungen des Verfahrens unterstützt durch entsprechende Oxidationsbeschleunigungsgase.

Durch den Einsatz dieses Verfahrens wird der Energieverbrauch deutlich reduziert und der Wartungsaufwand reduziert. Durch die gezielte Absaugung von entstehenden Dämpfen wird die Verunreinigung der Bänder deutlich reduziert und deren Aussehen deutlich verbessert.

In einer Ausführung der Erfindung wird die Induktions-Erwärmungseinrichtung mit einer Frequenz im Bereich zwischen 5 kHz und 100 kHz, vorzugsweise zwischen 10 kHz und 50 kHz, betrieben.

In weiteren zweckmäßigen Ausführungen wird die Zuführung der Metallbänder mit einer Fördergeschwindigkeit von mehr als 30 m/min, vorzugweise mehr als 70 m/min und noch bevorzugter mehr als 100 m/min, vorgenommen.

In einer weiteren Ausführung wird ausgangsseitig der Induktions-Erwärmungseinrichtung eine Temperaturmessung der Metallbänder ausgeführt und eine Leistungseinstellung der Induktions-Erwärmungseinrichtung in Abhängigkeit vom Ergebnis der Temperaturmessung vorgenommen. Hierdurch lässt sich vorteilhaft Energie beim Betrieb der Induktions-Erwärmungseinrichtung einsparen und ein gleichmäßiges Erscheinungsbild der behandelten Metallbänder gewährleisten.

In einer weiteren Ausgestaltung wird während der Erwärmung der Metallbänder eine Absaugung von Öldämpfen aus dem Raum über diesen und/oder eine Anreicherung dieses Raumes mit Sauerstoff ausgeführt, wodurch - wie weiter oben bereits angemerkt - weitere Qualitätsverbesserungen möglich werden.

In einer weiteren vorteilhaften Ausgestaltung werden die Metallbänder nach Durchlaufen der Induktions-Erwärmungseinrichtung einer zweiten Erwärmungseinrichtung zugeführt, in der bei konstanter Temperatur, insbesondere von ca. 320° C, ein Temperaturausgleich vorgenommen wird.

In einer weiteren Ausführung werden bei oder nach der Erwärmung Mittel zur Oxidationsbeschleunigung zur Einwirkung auf die zu oxidierende Oberfläche der Metallbänder gebracht.

In weiteren Ausgestaltungen der Erfindung werden Maßnahmen zur Vermeidung von Ausschuss oder jedenfalls von qualitativ unbefriedigenden Bandabschnitten beim Aneinander-Anfügen von Bändern getroffen. Speziell werden bei zum Anfügen erforderlichen Unterbrechungen der kontinuierlichen Zuführung der Metallbänder zur Induktions- Erwärmungseinrichtung Schritte zur Gewährleistung einer durchgehenden, unterbrechungsfreien Erwärmung der durchlaufenden Metallbänder auf die zur Oxidation erforderliche Temperatur ergriffen. Hierzu zählen insbesondere eine kurzzeitige Energiezuführung zur Induktions-Erwärmungseinrichtung bei stehenden Bändern und/oder eine Speisung der Induktions-Erwärmungseinrichtung mit erhöhter Leistung und/oder eine verzögerte Abschaltung der Energiezuführung zur Induktions-Erwärmungseinrichtung und/oder eine wiederholte Hindurchführung von Abschnitten der Längserstreckung der Bänder durch die Induktions-Erwärmungseinrichtung.

Vorrichtungsseitige Ausgestaltungen der Erfindung ergeben sich weitgehend analog zu den oben erwähnten Ausgestaltungen des vorgeschlagenen Verfahrens und werden insoweit hier nicht nochmals beschrieben.

Hingewiesen wird jedoch darauf, dass die Vorrichtung in einer Ausgestaltung mit einer Absaugeinrichtung zur Absaugung von Öldämpfen aus dem Raum über diesen und /oder einer Gaszuführeinrichtung zur Zuführung von mit Sauerstoff angereicherter Luft und/oder eines Mittels zur Förderung der Oxidation der Metallbänder in den Raum über diesen versehen sein kann.

In einer weiteren Ausgestaltung ist eine Zeit-/Leistungssteuereinrichtung zur Steuerung eines verzögerten Abschaltens und/oder einer erhöhten Betriebsleistung der Induktions-Erwärmungseinrichtung bei einem Stillstand der zugeführten Metallbänder vorgesehen. Alternativ hierzu ist eine mechanische Transportsteuereinrichtung zum Bewirken eines wiederholten Hindurchführens von Abschnitten der Metallbänder durch die Induktions-Erwärmungseinrichtung nach einem Stillstand der Metallbänder vorgesehen, die speziell Bandschlaufen bilden und wieder beseitigen kann.

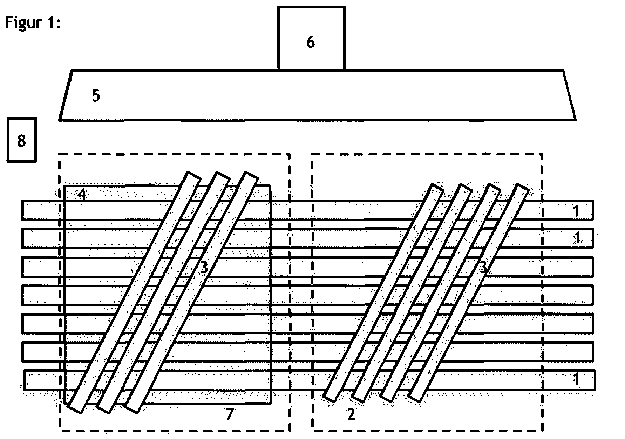

### Kurze Beschreibung der Zeichnung

Im Folgenden wird anhand der einzigen Zeichnung ein Ausführungsbeispiel der Erfindung näher erläutert. Diese Figur zeigt:
Die Figur zeigt skizzenartig wesentliche Aspekte des vorgeschlagenen Verfahrens bzw. der vorgeschlagenen Vorrichtung. Zu behandelnde Metallbänder 1 , deren Oberfläche typischerweise durch Öl verunreinigt ist, werden, vorzugsweise parallel nebeneinander, durch eine erste Induktionsspule 2, 3 geführt und dort erwärmt. Dabei freiwerdende Öldämpfe werden mit einer adäquaten Absaugung 5,6 abgeführt. Die Temperatur der Metallbänder am Ausgang wird mit Hilfe eines Temperatursensors 8 kontaktierend oder pyrometrisch gemessen. Die Ausgangsleistung des Induktionssystems wird damit eingestellt bzw. geregelt.
Die Frequenz der induktiven Erwärmung wird so angepasst, dass ein optimaler Wirkungsgrad des Prozesses erreicht wird. Bei optimaler Frequenzanpassung findet gleichzeitig eine durch Änderung der Werkstoffparameter bedingte automatische Temperaturanpassung der unterschiedlichen Metallbänder statt. Der bevorzugte Frequenzbereich liegt hierbei zwischen 5 kHz und 100 kHz, vorzugsweise zwischen 20 kHz und 50 kHz.

Die Temperaturhomogenität kann durch eine nachgelagerte indirekte Induktionszone 7, bei der durch Induktion eine Metallröhre 4 erwärmt und auf einer konstanten Temperatur von 320°C gehalten wird, erhöht werden. Hier können aber auch andere konventionelle Heizverfahren, wie z.B. elektrische beheizte Muffelöfen, eingesetzt werden.

Die Ausführung der Erfindung ist nicht auf die oben erläuterten Beispiele und Aspekte beschränkt, sondern ebenso in einer Vielzahl von Abwandlungen möglich, die im Rahmen fachmännischen Handelns liegen.

### Bezugszeichenliste

1 Metallbänder
2 Induktionscoil
3 Wassergekühlte Induktionsspule
4 Metallischer Suszeptor zur indirekten Erwärmung
5 Ablufthaube
6 Abluftrohr
7 Indirekte Induktionsausgleichszone
8 Temperatursensor

Die Erfindung hat, mindestens in zweckmäßigen Ausführungen, im Übrigen folgende Aspekte:
1. Es handelt sich um ein Verfahren und eine Vorrichtung zum Voroxidieren von Metallbändern mit Hilfe von Induktionstechnologie auf eine Temperatur von 320°C und anschließender Oxidation mit Luftsauerstoff, wobei die Erwärmung der Metallbänder mit Induktionstechnik erfolgt, wobei mehrere Metallbänder nebeneinander durch die gleiche Induktionsspule geführt werden
2. Der Frequenzbereich liegt zwischen 5 kHz und 100 kHz, vorzugsweise zwischen 10 kHz und 50 kHz.
3. Die Transportgeschwindigkeit der Transportbänder beträgt mehr als 30 m/min, vorzugweise mehr als 70 m/min und noch bevorzugter mehr als 100 m/min.
4. Die Länge der Induktionsspule beträgt weniger als 3 m, vorzugsweise weniger als 1 m.
5. Eine Temperaturmessung wird bei einem oder mehreren Bändern am Ausgang des Ofens integriert, welches zur Leistungsstellung des Induktionssystems verwendet wird.
6. Nachgeschaltet nach der induktiven Erwärmstrecke wird ein zweites Beheizungssystem eingesetzt, welches bei konstanter Temperatur einen Temperaturausgleich erzeugt.
7. Das zweite Heizsystem verwendet eine indirekte Induktion, d.h. dass induktiv ein Metallrohr auf eine konstante Temperatur von 320°C gehalten wird und in diesem Rohr (metallischer Suszeptor) der Temperaturausgleich durch Strahlung erfolgt.
8. Zur Beschleunigung der Oxidation wird zusätzlich Sauerstoff nach der Erwärmung zugeführt.
9. Zusätzlich zur induktiven Erwärmung wird eine Absaugung für Öldämpfe integriert.
10. Die Induktionsspulen sind in ihrer Geometrie so angepasst, dass die Metallbänder alle die gleiche Energieaufnahme zeigen.

## Patentansprüche

1. Verfahren zur Herstellung oxidierter Metallbänder, wobei eine Mehrzahl von Metallbändern zeitgleich in Parallel-Anordnung mit einer Fördergeschwindigkeit von mehr als 30 m/min, vorzugsweise mehr als 70 m/min und noch bevorzugter mehr als 100 m/min, durch eine Induktions-Erwärmungseinrichtung, die insbesondere eine von sämtlichen Metallbändern gemeinsam durchlaufene Induktionsspule aufweist, geführt und dort auf eine vorgegebene Oxidationstemperatur erwärmt und durch Zuführung von Luftsauerstoff oxidiert wird und die Metallbänder nach Durchlaufen der Induktions-Erwärmungseinrichtung einer zweiten Erwärmungseinrichtung zugeführt werden, in der bei konstanter Temperatur ein Temperaturausgleich vorgenommen wird.

2. Verfahren nach Anspruch 1 , wobei die Induktions-Erwärmungseinrichtung mit einer Frequenz im Bereich zwischen 5 kHz und 100 kHz, vorzugsweise zwischen 10 kHz und 50 kHz, betrieben wird.

3. Verfahren nach einem der vorangehenden Ansprüche, wobei ausgangsseitig der Induktions-Erwärmungseinrichtung eine Temperaturmessung der Metallbänder ausgeführt und eine Leistungseinstellung der Induktions-Erwärmungseinrichtung in Abhängigkeit vom Ergebnis der Temperaturmessung vorgenommen wird.

4. Verfahren nach einem der vorangehenden Ansprüche, wobei während der Erwärmung der Metallbänder eine Absaugung von Öldämpfen aus dem Raum über diesen und/oder eine Anreicherung dieses Raumes mit Sauerstoff ausgeführt wird.

5. Verfahren nach einem der vorangehenden Ansprüche, wobei bei oder nach der Erwärmung Mittel zur Oxidationsbeschleunigung zur Einwirkung auf die zu oxidierende Oberfläche der Metallbänder gebracht werden.

6. Verfahren nach einem der vorangehenden Ansprüche, wobei bei Unterbrechungen der kontinuierlichen Zuführung der Metallbänder zur Induktions-Erwärmungseinrichtung Schritte zur Gewährleistung einer durchgehenden, unterbrechungsfreien Erwärmung der durchlaufenden Metallbänder auf die zur Oxidation erforderliche Temperatur ergriffen werden, insbesondere eine kurzzeitige Energiezuführung zur Induktions-Erwärmungseinrichtung bei stehenden Bändern und/oder eine Speisung der Induktions-Erwärmungseinrichtung mit erhöhter Leistung und/oder eine verzögerte Abschaltung der Energiezuführung zur Induktions-Erwärmungseinrichtung und/oder eine wiederholte Hindurchführung von Abschnitten der Längserstreckung der Bänder durch die Induktions-Erwärmungseinrichtung.

7. Vorrichtung zur Durchführung des Verfahrens nach einem der vorangehenden Ansprüche, mit
einer Induktions-Erwärmungseinrichtung, die zur gleichzeitigen parallelen Hindurchführung einer Mehrzahl von Metallbändern konfiguriert ist, einer Transporteinrichtung zum Fördern der Metallbänder durch die Induktions-Erwärmungseinrichtung mit einer Fördergeschwindigkeit von mehr als 30 m/min, vorzugweise mehr als 70 m/min und noch bevorzugter mehr als 100 m/min, einer Gaszuführeinrichtung zur Zuführung von mit Sauerstoff angereicherter Luft und/oder eines Mittels zur Förderung der Oxidation der Metallbänder in den Raum über diesen und
einem ausgangsseitig der Induktions-Erwärmungseinrichtung vorgesehenen zweiten Beheizungssystem zum Bewirken eines Temperaturausgleichs der Metallbänder bei konstanter Temperatur.

8. Vorrichtung nach Anspruch 7, wobei die Induktions-Erwärmungseinrichtung eine die Metallbänder nebeneinander aufnehmende Induktionsspule aufweist, deren Länge weniger als 3 m, vorzugsweise weniger als 1 m, beträgt.

9. Vorrichtung nach Anspruch 7 oder 8, mit einer Temperatursensorik zur Erfassung der Temperatur der Metallbänder und einer eingangsseitig mit der Temperatursensorik verbundenen Leistungssteuereinrichtung zur Leistungseinstellung der Induktions-Erwärmungseinrichtung in Abhängigkeit vom Ausgangssignal der Temperatursensorik.

10. Vorrichtung nach einem der Ansprüche 7 bis wobei das zweite Beheizungssystem ein Metallrohr zum Bewirken des Temperaturausgleichs durch Strahlung umfasst.

11. Vorrichtung nach einem der Ansprüche 7 bis 9, mit einer Absaugeinrichtung zur Absaugung von Öldämpfen aus dem Raum über diesen

12. Vorrichtung nach einem der Ansprüche 7 bis 11, mit einer Zeit-/Leistungssteuereinrichtung zur Steuerung eines verzögerten Abschaltens und/oder einer erhöhten Betriebsleistung der Induktions-Erwärmungseinrichtung bei einem Stillstand der zugeführten Metallbänder.

13. Vorrichtung nach einem der Ansprüche 7 bis 12, mit einer mechanischen Transportsteuereinrichtung zum Bewirken eines wiederholten Hindurchführens von Abschnitten der Metallbänder durch die Induktions-Erwärmungseinrichtung nach einem Stillstand der Metallbänder.

## Claims

1. A method for producing oxidized metal strips, wherein a plurality of metal strips is guided simultaneously in a parallel arrangement and at a conveying speed of more than 30 m/min, preferably of more than 70 m/min, and even more preferred of more than 100 m/min, through an induction heating device comprising in particular an induction coil passed through collectively by the all of the metal strips, and is heated there to a predefined oxidation temperature and oxidized by supplying atmospheric oxygen, and the metal strips, after passing through the induction heating device, are supplied to a second heating device where a temperature compensation is performed at a constant temperature.

2. The method according to claim 1, wherein the induction heating device is operated at a frequency in the range of between 5 kHz and 100 kHz, preferably of between 10 kHz and 50 kHz.

3. The method according to anyone of the preceding claims, wherein, at the output side of the induction heating device, a temperature measurement of the metal strips is realized, and a power setting of the induction heating device is performed as a function of the result of the temperature measurement.

4. The method according to anyone of the preceding claims, wherein, during the heating of the metal strips, an extraction of oil vapors from the space above the metal strips and/or an enrichment of said space with oxygen is realized.

5. The method according to anyone of the preceding claims, wherein, during or after the heating, means for accelerating the oxidation are applied for acting upon the surface of the metal strips to be oxidized.

6. The method according to anyone of the preceding claims, wherein, in case of interruptions in the continuous supply of the metal strips to the induction heating device, measures are taken for ensuring a continuous, uninterrupted heating of the transiting metal strips up to the temperature required for oxidation, in particular a short-term energy supply to the induction heating device in case of strips being at standstill and/or a feeding of the induction heating device with increased power and/or a delayed switch-off of the energy supply to the induction heating device and/or a repeated guiding of sections of the longitudinal extension of the strips through the induction heating device.

7. An apparatus for executing the method according to anyone of the preceding claims, comprising
an induction heating device configured for simultaneously passing through in parallel a plurality of metal strips, conveying means for conveying the metal strips through the induction heating device at a conveying speed of more than 30 m/min, preferably of more than 70 m/min, and even more preferred of more than 100 m/min, a gas supply device for supplying air enriched with oxygen and/or a means for promoting the oxidation of the metal strips in the space above the metal strips, and
a second heating system provided at the output side of the induction heating device to cause a temperature compensation of the metal strips at a constant temperature.

8. The apparatus according to claim 7, wherein the induction heating device features an induction coil receiving the metal strips side by side, whose length is less than 3 m, preferably less than 1 m.

9. The apparatus according to claim 7 or 8, comprising a temperature sensor system for detecting the temperature of the metal strips and a power control device connected to the temperature sensor system at the output side for setting the power of the induction heating device as a function of the output signal of the temperature sensor system.

10. The apparatus according to anyone of claims 7 to 9, wherein the second heating system comprises a metal tube to cause the temperature compensation by radiation.

11. The apparatus according to anyone of claims 7 to 9, comprising an extraction device for extracting oil vapors from the space above the metal strips.

12. The apparatus according to anyone of claims 7 to 11, comprising a time/power control device for controlling a delayed switch-off and/or an increased operating power of the induction heating device in case of a standstill of the supplied metal strips.

13. The apparatus according to anyone of claims 7 to 12, comprising a mechanical conveyance control device to cause a repeated guiding of sections of the metal strips through the induction heating device after a standstill of the metal strips.

## Revendications

1. Procédé de fabrication de bandes métalliques oxydées, sachant qu'une pluralité de bandes métalliques est guidée simultanément en agencement parallèle à travers un dispositif de chauffage par induction, lequel présente en particulier une bobine d'induction traversée conjointement par toutes les bandes métalliques, à une vitesse d'acheminement de plus de 30 m/mn, de préférence de plus de 70 m/mn et de façon encore plus préférentielle de plus de 100 m/mn, et y est chauffée à une température d'oxydation spécifiée et oxydée par apport d'oxygène de l'air, et les bandes métalliques, après leur guidage à travers le dispositif de chauffage par induction, sont amenées à un deuxième dispositif de chauffage dans lequel un équilibrage de température est effectué à température constante.

2. Procédé selon la revendication 1, sachant que le dispositif de chauffage par induction est exploité à une fréquence comprise entre 5 kHz et 100 kHz, de préférence entre 10 kHz et 50 kHz.

3. Procédé selon l'une des revendications précédentes, sachant qu'une mesure de température des bandes métalliques est effectuée en sortie du dispositif de chauffage par induction et un réglage de puissance du dispositif de chauffage par induction est effectué en fonction du résultat de la mesure de température.

4. Procédé selon l'une des revendications précédentes, sachant que, pendant le chauffage des bandes métalliques, une aspiration de vapeurs d'huile hors de l'espace au-dessus de celles-ci et/ou un enrichissement de cet espace en oxygène est effectué.

5. Procédé selon l'une des revendications précédentes, sachant que, pendant ou après le chauffage, des moyens destinés à accélérer l'oxydation sont placés sur la surface à oxyder des bandes métalliques pour agir sur celles-ci.

6. Procédé selon l'une des revendications précédentes, sachant que, en cas d'interruptions de l'amenée continue des bandes métalliques au dispositif de chauffage par induction, des mesures sont prises pour garantir un chauffage continu, sans interruption, des bandes métalliques traversantes à la température nécessaire pour l'oxydation, en particulier un bref apport d'énergie au dispositif de chauffage par induction en cas de bandes immobiles et/ou une alimentation du dispositif de chauffage par induction en puissance accrue et/ou une coupure retardée de l'apport d'énergie au dispositif de chauffage par induction et/ou un guidage répété de sections de l'extension longitudinale des bandes à travers le dispositif de chauffage par induction.

7. Dispositif pour l'exécution du procédé selon l'une des revendications précédentes, comprenant
un dispositif de chauffage par induction qui est configuré pour le guidage parallèle simultané d'une pluralité de bandes métalliques à travers celui-ci,
un dispositif de transport pour l'acheminement des bandes métalliques à travers le dispositif de chauffage par induction à une vitesse d'acheminement de plus de 30 m/mn, de préférence de plus de 70 m/mn et de façon encore plus préférentielle de plus de 100 m/mn,
un dispositif d'amenée de gaz pour l'amenée d'air enrichi en oxygène et/ou un moyen visant à favoriser l'oxydation des bandes métalliques dans l'espace au-dessus de celles-ci, et
un deuxième système de chauffage prévu en sortie du dispositif de chauffage par induction pour entraîner un équilibrage de température des bandes métalliques à température constante.

8. Dispositif selon la revendication 7, sachant que le dispositif de chauffage par induction présente une bobine d'induction accueillant les bandes métalliques les unes à côté des autres, et dont la longueur est de moins de 3 m, de préférence de moins de 1 m.

9. Dispositif selon la revendication 7 ou 8, comprenant un système de capteur de température pour la saisie de la température des bandes métalliques et un dispositif de commande de puissance relié en entrée au système de capteur de température pour le réglage de puissance du dispositif de chauffage par induction en fonction du signal de sortie du système de capteur de température.

10. Dispositif selon l'une des revendications 7 à 9, sachant que le deuxième système de chauffage comprend un tube métallique pour entraîner l'équilibrage de température par rayonnement.

11. Dispositif selon l'une des revendications 7 à 9, comprenant un dispositif d'aspiration pour l'aspiration de vapeurs d'huile hors de l'espace au-dessus des bandes métalliques.

12. Dispositif selon l'une des revendications 7 à 11, comprenant un dispositif de commande de temps/de puissance pour la commande d'une coupure retardée et/ou d'une puissance de fonctionnement accrue du dispositif de chauffage par induction en cas d'immobilisation des bandes métalliques amenées.

13. Dispositif selon l'une des revendications 7 à 12, comprenant un dispositif de commande de transport mécanique pour entraîner un guidage répété de sections des bandes métalliques à travers le dispositif de chauffage par induction après une immobilisation des bandes métalliques.
